Europäisches Patentamt

European Patent Office

Office européen des brevets

(19)

(11) **EP 1 039 363 B1**

(12) **EUROPEAN PATENT SPECIFICATION**

(45) Date of publication and mention
of the grant of the patent:
**14.01.2004 Bulletin 2004/03**

(51) Int Cl.⁷: **G06F 1/00**

(21) Application number: **00200980.1**

(22) Date of filing: **17.03.2000**

(54) **Method of providing secured data traffic in a computer**

Verfahren um einen gesicherten Datenverkehr in einem Rechnernetzwerk zu liefern

Méthode pour fournir un trafic de données sécurisées dans un réseau d'ordinateur

(84) Designated Contracting States:
**AT BE CH CY DE DK ES FI FR GB GR IE IT LI LU
MC NL PT SE**

(30) Priority: **19.03.1999 NL 1011600**

(43) Date of publication of application:
**27.09.2000 Bulletin 2000/39**

(73) Proprietor: **No Wires Needed B.V.
3723 BG Bilthoven (NL)**

(72) Inventors:
• **Brockmann, Ronald Alexander
3572 AX Utrecht (NL)**
• **Hoeben, Maarten
3706 HW Zeist (NL)**
• **Zwemmer, Arnoud Roderick
3581 AE Utrecht (NL)**

(74) Representative: **Van Breda, Jacobus
Octrooibureau Los & Stigter,
P.O. Box 20052
1000 HB Amsterdam (NL)**

(56) References cited:
**EP-A- 0 725 512          WO-A-98/25375
GB-A- 2 318 486**

## Description

The invention relates to a method of providing secured data traffic in a computer network, which is provided with a central access control device and computers that are distributed and that can be connected and disconnected to the network, wherein each computer is provided with a key whose authenticity, previous to connecting the computer in the network is checked by the access control device, in order to either authorize or refuse connection.

Such a method has long since been known in the practice of computer networks application. Desirably, in such computer networks that may be wireless or wired, only authenticated computers are admitted to the network, in order to secure the integrity of the network. Normally computer users enter a password or the like that is checked for authenticity, and access to the network is refused if the password is incorrect.

Such a system involves considerable drawbacks. For example, the known system requires that a register of the authenticated passwords be kept. An additional disadvantage for the user is that he runs the risk of forgetting the password, thereby rendering access to the network impossible. In some circumstances such a situation is very undesirable, for example, in the event of access being sought in a crisis situation to data that is only available via the network. Such a situation might arise with a data network as used in a hospital or a nuclear power station.

An important drawback is further the continuous attention required of the management of the computer network in connection with, among other things, successive computers that also have to be authenticated. These problems play a role especially in wireless networks, but are not limited to these. Because the communication occurs trough the air, it is in particular the wireless networks that have a more open character than is the case with a wired network. Moreover, due to this open character there is an increased risk that access keys are overheard, so that unauthorized persons are able to gain access to the network by using the overheard keys.

It is the object of the invention to provide a method of secured data traffic in which these problems do not occur, and the application of which is easily implemented.

A method of providing secured data traffic in a computer network of the above-mentioned type in which the key of each computer is secret and is only present in the respective computer, and wherein from this key the computer derives a public key with an algorithm predefined in the computer that is also present in the access control device, whereby the public key is sent by that computer to the access control device, is known from EP-A-0,725,512.

The method according to the invention is characterized in that the access control device processes the received public key in the algorithm into a check value, that the access control device sends a check key to the computer which in accordance with the algorithm processes the check key together with the key of that computer into a response which the computer sends to the access control device, and in that the access control device admits the computer to the network if the response is identical with the check value, and in that the algorithm is geared such that any result from the algorithm can be derived from a plurality of possible input parameters of the algorithm, whereas only the key present in the computer supplies the check value.

As mentioned, the key has to be secret; uniqueness is desirable but not essential. Since the number of possible keys is very large, the chance of two computers having the same key is small, provided they have been chosen randomly.

Desirably, the key present in every computer is not accessible to users of the computer and cannot be obtained from it. This is made possible, for example, by saving this secret key in the read only memory in a part that is not accessible to users. The respective key can be entered into the computer once only during its manufacture, just like the algorithm that the computer uses in the method according to the invention. As explained above, this algorithm is also a component of the access control device. As a result of the invention, the public key that can be derived by the computer from its secret key may become openly known since, due to the nature of the algorithm that every result can be derived from a plurality of possible input parameters, it is practically impossible to determine the secret key by knowing the public key and the algorithm. As a result of the message traffic between the access control device and the computer that after receipt of the public key is initiated by the access control device according to the invention, and in which a check key is sent to the computer that processes this together with its secret key into a response that has to identify with the check value derived by the access control device on the basis of the public key, a check will finally be carried out to determine whether the respective computer possesses the correct secret key.

The attraction of the method according to the invention is that the authorized public keys may become generally known, without compromising the secret keys of the computers to be coupled to the network. The best network security can be obtained if all the authorized public keys are previously entered into the access control device.

Advantageously, however, the method according to the invention may also be realized such that at a first attempt to connect a computer, the access control device authenticates the public key sent by said computer as being an authorized public key. This greatly reduces the problems of controlling the secured network, so that the correct algorithm needs only to be put into the access control device and into the computers produced for the network, and the respective computers have to be provided with secret keys.

The results of the invention can be achieved in particular with an embodiment characterized in that the computer derives the public key from its secret key according to the algorithm $pb = g^{pv} \bmod p$, in which p is a predetermined prime number, and g is a predetermined base number, and in that the access control device processes the received public key pb into a check value cw in accordance with the algorithm $cw = (pb)^x \bmod p$, in which x is a predetermined check number, and in that the access control device sends a check key cs to the computer, which is determined according to the algorithm $cs = (g)^x \bmod p$, in that the computer processes the check key cs in the algorithm $a = (cs)^{pv} \bmod p$, in which a is the response the computer sends to the access control device, in that the access control device compares the response a with the check value cw, and if identical, admits the computer to the network.

In a further aspect of the invention, in which the method can be applied if there are two or more access control devices, it is desirable that the access control devices be in data-sharing communication, so that after a computer has been coupled via a first access control device, the computer is free to switch to a further access control device.

These objects are solved in advantageous manner basically by applying the features laid down in claim 1. Further enhancements being provided by the subclaims.

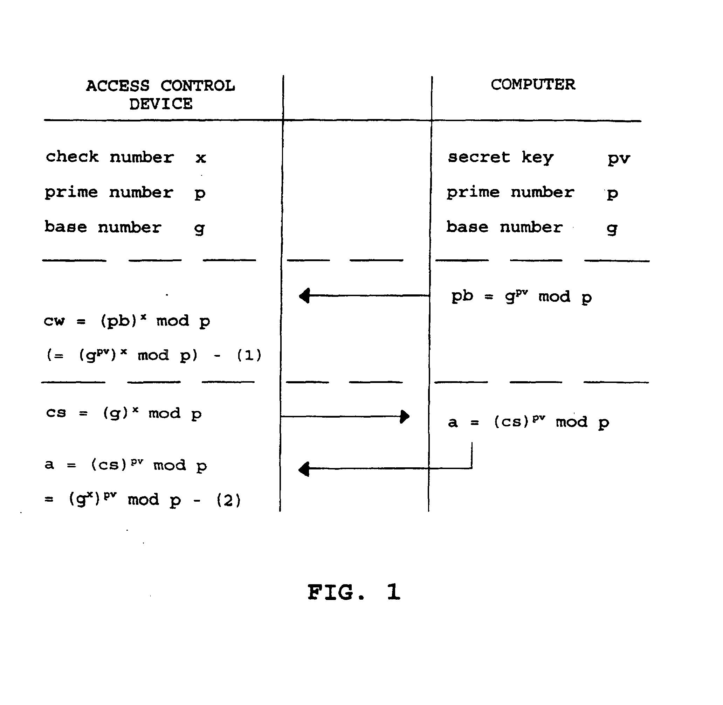

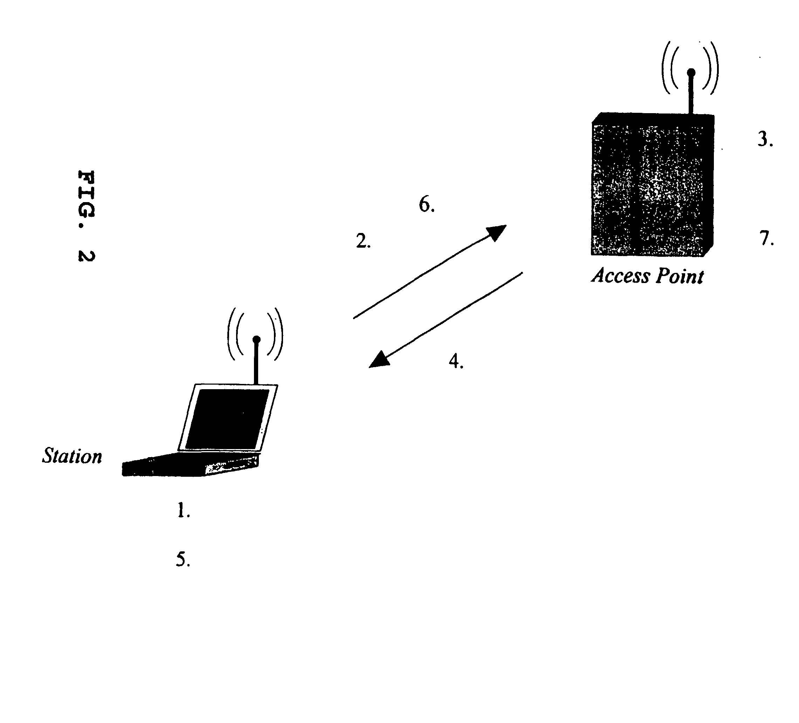

The invention will now be explained in more detail with reference a non-limiting exemplary embodiment with reference to the accompanying Figures 1 and 2.

Figure 1 shows a flow sheet of a communication course between the computer and the access control device of the network.

Figure 2 shows the communication course represented in Figure 1 in the set-up comprising a computer (station) and an access control device (access point).

The communication course between the computer and the access control device will now be elucidated with reference to Figure 1, in which a numeral 1 - 7 indicates some step shown in Figure 2.

Figure 1 shows that in the access control device (access point) predetermined values are given to a check number x, a prime number p, and a base number g. The prime number p is also present in the computer ( station) seeking access to the network via the access control device. This computer also knows a secret key pv that is only known to said computer. The computer also knows the base number g. In step 1, the computer derives a public key pb from the secret key pv according to the algorithm $pb = g^{pv} \bmod p$ in order to obtained access. In step 2, the computer sends this public key pb to the access control device. In step 3, the access control device processes the public key pb into a check value cw in accordance with the formula $cw = (pb)^x \bmod p$. This identifies the check value with $(g^{pv})^x \bmod p$ (Formula 1). In step 4, the access control device subsequently sends a check key cs to the computer, determined according to the algorithm $cs = (g)^x \bmod p$. In step 5, the computer processes the value cs in the algorithm $a = (cs)^{pv} \bmod p$, and in step 6, returns a response a to the access control device. The value of the response a equals $(g^x)^{pv} \bmod p$, as shown in Formula 2. In step 7, the access control device compares the value of the response a with the value from cw, and if identical (compare Formula 1 and Formula 2), which is determined by the correct value of the secret key pv, the access control device will allow the computer access to the network.

The person skilled in the art appreciates that an algorithm other than that explained in the exemplary embodiment may also meet the prerequisites of each result of the algorithm being derivable from a plurality of possible input parameters, while only the key present in the computer is able to supply the check value. The exemplary embodiment therefore must not be understood to be limiting. The person skilled in the art will also appreciate that with a particular choice of algorithm, the choice of the secret key pv, the prime number p, the base number g, and the check number x, may optionally be pre-set and are not limited to specific values.

## Claims

1. A method of providing secured data traffic in a computer network, which is provided with a central access control device and computers that are distributed and that can be connected and disconnected to the network, wherein each computer is provided with a key whose authenticity, previous to connecting the computer in the network is checked by the access control device, in order to either authorize or refuse connection, wherein the key (pv) of each computer is secret and is only present in the respective computer, and wherein from this key (pv) the computer derives a public key (pb) with an algorithm predefined in the computer that is also present in the access control device, whereby the public key (pb) is sent by that computer to the access control device, **characterized in that** the access control device processes the received public key (pb) in the algorithm into a check value, that the access control device sends a check key to the computer which in accordance with the algorithm processes the check key together with the key (pv) of that control device, and **in that** the access control device admits the computer to the network if the response is identical with the check value, and **in that** the algorithm is geared such that any result from the algorithm can be derived from a plurality of possible input parameters of the algorithm, whereas only the key present in the computer supplies the check value.

**2.** A method according to claim 1, **characterized in that** the key has been permanently programmed into the computer once only.

**3.** A method according to claim 1, **characterized in that** at a first attempt to connect a computer, the access control device authenticates the public key (pb) sent by said computer as being an authorized public key.

**4.** A method according to one of the claims 1 - 3, **characterized in that** the computer derives the public key (pb) from its secret key (pv) according to the algorithm

$$pb = g^{pv} \bmod p,$$

in which p is a predetermined prime number, and g is a predetermined base number, and **in that** the access control device processes the received public key (pb) pb into a check value (cw) in accordance with the algorithm

$$cw = (pb)^{x} \bmod p$$

in which x is a predetermined check number, and **in that** the access control device sends a check key (cs) to the computer, which is determined according to the algorithm

$$cs = (g)^{x} \bmod p$$

**in that** the computer processes the check key (cs) in the algorithm

$$a = (cs)^{pv} \bmod p$$

in which a is the response the computer sends to the access control device, **in that** the access control device compares the response a with the check value (cw), and if identical, admits the computer to the network.

**5.** A method according to one of the claims 1-4, **characterized in that** the access control devices are in data-sharing communication, so that after a computer has been coupled via a first access control device, the computer is free to switch to a further access control device.

**Patentansprüche**

**1.** Verfahren zum Bereitstellen eines gesicherten Datenverkehrs in einem Computer-Netzwerk, welches mit einer zentralen Zugangssteuereinrichtung und Computern versehen ist, welche verteilt sind, und welche verbunden mit und getrennt vom Netzwerk werden können, wobei jeder Computer mit einem Schlüssel versehen ist, dessen Authentizität bzw. Echtheit vor dem Verbinden des Computers mit dem Netzwerk durch die Zugangssteuereinrichtung geprüft wird, um die Verbindung entweder zuzulassen oder abzulehnen, wobei der Schlüssel (pv) von jedem Computer geheim ist und nur in dem entsprechenden Computer vorliegt, und wobei der Computer von diesem Schlüssel (pv) einen öffentlichen Schlüssel (pb) mit einem in dem Computer vordefinierten Algorithmus ableitet, welcher ebenfalls in der Zugangssteuereinrichtung vorliegt, wobei der öffentliche Schlüssel (pb) durch diesen Computer zu der Zugangssteuereinrichtung gesendet wird, **dadurch gekennzeichnet, daß** die Zugangssteuereinrichtung den empfangenen öffentlichen Schlüssel (pb) in dem Algorithmus in einen Prüfwert verarbeitet, daß die Zugangssteuereinrichtung einen Prüfschlüssel an den Computer sendet, welcher in Abhängigkeit von dem Algorithmus den Prüfschlüssel zusammen mit dem Schlüssel (pv) dieser Steuereinrichtung verarbeitet bzw. prozessiert, und daß die Zugangssteuereinrichtung den Computer in dem Netzwerk zuläßt, wenn die Antwort gleich dem Prüfwert ist, und daß der Algorithmus derart ausgerichtet ist, daß jedes Ergebnis von dem Algorithmus von einer Vielzahl möglicher Eingabeparameter des Algorithmus abgeleitet werden kann, wobei nur der vorliegende Schlüssel in dem Computer den Prüfwert bereitstellt.

**2.** Verfahren nach Anspruch 1, **dadurch gekennzeichnet, daß** der Schlüssel einmalig permanent in den Computer programmiert wurde.

**3.** Verfahren nach Anspruch 1, **dadurch gekennzeichnet, daß** bei einem ersten Versuch zum Verbinden des Computers die Zugangssteuereinrichtung den öffentlichen Schlüssel (pb) authentifiziert, welcher durch den Computer als autorisierter öffentlicher Schlüssel gesendet wird.

**4.** Verfahren nach einem der Ansprüche 1 bis 3, **dadurch gekennzeichnet, daß** der Computer den öffentlichen Schlüssel (pb) von seinem geheimen Schlüssel (pv) gemäß dem Algorithmus

$$pb = g^{pv} \bmod p$$

ableitet, in welchem p eine vorbestimmte Primzahl ist, und g eine vorbestimmte Basiszahl ist und daß die Zugangssteuereinrichtung den empfangenen öffentlichen Schlüssel (pb) in einen Prüfwert (cw) gemäß dem Algorithmus

$$cw = (pb)^x \bmod p$$

verarbeitet, in welchem x eine vorbestimmte Prüfzahl ist, und daß die Zugangssteuereinrichtung einen Prüfschlüssel (cs) an den Computer sendet, welcher gemäß dem Algorithmus

$$cs = (g)^x \bmod p$$

bestimmt wird, daß der Computer den Prüfschlüssel (cs) mit dem Algorithmus

$$a = (cs)^{pv} \bmod p$$

verarbeitet, in welchem a eine Antwort ist, welche der Computer zu der Zugangssteuereinrichtung sendet, daß die Zugangssteuereinrichtung die Antwort mit einem Prüfwert (cw) vergleicht, und falls Gleichheit vorliegt, den Computer in dem Netzwerk zuläßt.

5. Verfahren nach einem der Ansprüche 1 bis 4, **dadurch gekennzeichnet, daß** die Zugangssteuereinrichtungen in datenaustauschender Kommunikation sind, so daß, nachdem ein Computer über eine erste Zugangssteuereinrichtung eingekoppelt wurde, der Computer zum Schalten zu einer weiteren Zugangssteuereinrichtung frei bzw. befähigt ist.

**Revendications**

1. Procédé permettant d'offrir un trafic de données sécurisé dans un réseau informatique, lequel comprend un dispositif de commande d'accès central et des ordinateurs qui sont répartis et qui peuvent être connectés ou déconnectés du réseau, dans lequel chaque ordinateur possède une clé dont l'authenticité est vérifiée par le dispositif de commande d'accès avant de connecter l'ordinateur au réseau de manière à autoriser ou à interdire la connexion, dans lequel la clé (pv) de chaque ordinateur est secrète et n'est présente que dans l'ordinateur respectif, et dans lequel, à partir de cette clé (pv), l'ordinateur calcule une clé publique (pb) à l'aide d'un algorithme prédéterminé dans l'ordinateur qui est également présent dans le dispositif de commande d'accès, la clé publique (pb) étant ainsi envoyée par cet ordinateur au dispositif de commande d'accès, **caractérisé en ce que** le dispositif de commande d'accès traite la clé publique (pb) reçue dans l'algorithme en une valeur de vérification, **en ce que** le dispositif de commande d'accès envoie une clé de vérification à l'ordinateur qui, en fonction de l'algorithme, va traiter la clé de vérification à l'aide de la clé (pv) de ce dispositif de commande, et **en ce que** le dispositif de commande d'accès admet l'ordinateur dans le réseau si la réponse est identique à la valeur de vérification, et **en ce que** l'algorithme est conçu de sorte que tout résultat de l'algorithme peut être calculé à partir de plusieurs paramètres d'entrée possibles de l'algorithme, tandis que seule la clé présente dans l'ordinateur donne la valeur de vérification.

2. Procédé, selon la revendication 1, **caractérisé en ce que** la clé a été programmée de manière permanente et une seule fois dans l'ordinateur.

3. Procédé, selon la revendication 1, **caractérisé en ce que**, lors d'une première tentative de connexion d'un ordinateur, le dispositif de commande d'accès authentifie la clé publique (pb) envoyée par ledit ordinateur comme étant une clé publique autorisée.

4. Procédé, selon l'une quelconque des revendications 1 à 3, **caractérisé en ce que** l'ordinateur calcule la clé publique (pb) à partir de sa clé secrète (pv) en fonction de l'algorithme

$$pb = g^{pv} \bmod p$$

où p est un nombre premier prédéterminé, tandis que g est un nombre de base prédéterminé, et **en ce que** le dispositif de commande d'accès traite la clé publique reçue (pb) en une valeur de vérification (cw) en fonction de l'algorithme

$$cw = (pb)^x \bmod p$$

où x est un nombre de vérification prédéterminé, et **en ce que** le dispositif de commande d'accès envoie une clé de vérification (cs) à l'ordinateur qui est déterminée en fonction de l'algorithme

$$cs = (g)^x \bmod p$$

**en ce que** l'ordinateur traite la clé de vérification (cs) dans l'algorithme

$$a = (cs)^{pv} \bmod p$$

où a est la réponse que l'ordinateur envoie au dispositif de commande d'accès, et **en ce que** le dispositif de commande d'accès compare la réponse avec la valeur de vérification (cw) et, si elle est identique, admet l'ordinateur dans le réseau.

5. Procédé, selon l'une quelconque des revendications 1 à 4, **caractérisé en ce que** les dispositifs de commande d'accès sont en communication d'échange de données de sorte que, une fois qu'un ordinateur a été couplé par le biais d'un premier dispositif de commande d'accès, l'ordinateur est libre de passer à un autre dispositif de commande d'accès.

| ACCESS CONTROL<br>DEVICE | | COMPUTER |
|---|---|---|
| check number   x<br>prime number   p<br>base number   g | | secret key        pv<br>prime number    p<br>base number    g |
| $cw = (pb)^x \bmod p$<br>$(= (g^{pv})^x \bmod p) - (1)$ | $\longleftarrow$ | $pb = g^{pv} \bmod p$ |
| $cs = (g)^x \bmod p$<br><br>$a = (cs)^{pv} \bmod p$<br>$= (g^x)^{pv} \bmod p - (2)$ | $\longrightarrow$<br>$\longleftarrow$ | $a = (cs)^{pv} \bmod p$ |

## FIG. 1

FIG. 2